# EUROPEAN PATENT APPLICATION

(11) **EP 1 589 243 A1**
(43) Date of publication of application: **26.10.2005**
(21) Application number: 05103172.2
(22) Date of filing: 20.04.2005
(51) Int. Cl.: F16D 3/34

(54) **High speed high angle universal joint**

(30) Priority: 23.04.2004 US 831497
(71) Applicant: American Axle & Manufacturing, Inc., Detroit, MI 48211-1198 (US)
(72) Inventor: Gehrke, Glenn F., 48350, Davisburg (US)
(74) Representative: Kraenzmer, Martin

(57) **Abstract**

A universal joint includes a first shaft (14) having a first member and a distal end. A first constant velocity joint is fixed to the first member and includes spherical balls to transmit a driving torque. A second shaft (18) has a second member and a distal end. A second constant velocity joint is fixed to the second member, which also includes torque transmission spherical balls (26,27). A centering mechanism (22) joins the first and second members and includes a semi-spherical female member (38) connected to the first shaft distal end, and a male member (39) having a semi-spherical portion (44) rotatably received by the female member (38). The male member connects to the second shaft using a sliding joint and is axially displaceable relative to the second shaft such that universal joint displacement is equally divided between the first and second shafts.

## Description

### FIELD OF THE INVENTION

The present invention relates in general to rotational connection joints and more specifically to a device and method of manufacturing for a universal joint.

### BACKGROUND OF THE INVENTION

Universal joints of the double cardan type are known which are used to accommodate maximum drive line deflections up to approximately 25°. The double cardan joint is generally effective up to approximately 12° of drive line deflection at typical operating conditions. One disadvantage of the double cardan joint is that it is susceptible to increased wear and centering mechanism free play when operated at higher deflection angles. Another disadvantage of the double cardan joint is that it is also susceptible to damage by infiltration of dirt, etc. because the centering mechanisms of these joints are generally not sealed to prevent exposure to environmental conditions.

An improvement to the double cardan joint includes a universal joint having two connected constant velocity joints. An example of this is provided in U. S. Patent 3,857,256 to Girguis, issued December 31, 1974. A similar joint design including seals to prevent dirt or environmental contamination of the constant velocity joints is provided in U.S. Patent 3,593,541 to Kuroda, issued July 20, 1971. These universal joint designs provide multiple constant velocity joints within an outer bearing race. Each constant velocity joint is fixed to either one of an input or an output shaft of the universal joint. Either the ends of the shaft or connections to the shaft are joined at about the center of the universal joint to evenly distribute the total displacement between both constant velocity joint assemblies of the universal joint. Rigid centering mechanism halves are provided to approximately divide the total displacement angle of the universal joint between both constant velocity joints. The rigid centering mechanism halves rely on proper alignment of the various universal joint components and generally provide only point contact between curved surfaces when the universal joints are in their displaced conditions.

### SUMMARY OF THE INVENTION

In one form, the present teachings provide a universal joint comprising a first shaft having a first axially extending member and a distal end. A first constant velocity joint is fixedly connected to the first axially extending member, the first constant velocity joint including a first plurality of spherical balls. A second shaft has a second axially extending member and a second shaft distal end. A second constant velocity joint is fixedly connected to the second axially extending member, the second constant velocity joint including a second plurality of spherical balls. A centering mechanism operably joins the first axially extending member to the second axially extending member, the centering mechanism including: a semi-spherical female member connectable to the first shaft distal end; and a male member having a semi-spherical portion rotatably receivable by the female member. The male member is slidably coupled to the second shaft.

In another form, the present teachings provide a universal joint operable to transmit a driving torque having a first assembly including a first constant velocity joint fixedly connected to a first longitudinal shaft. A second assembly includes a second constant velocity joint fixedly connected to a second longitudinal shaft. A bearing race is operably engaged with both the first and second constant velocity joints, the bearing race operable to transmit the driving torque from the first constant velocity joint to the second constant velocity joint. A rotatable mechanism operably joins the first longitudinal shaft to the second longitudinal shaft, the rotatable mechanism including: a first bearing member connectable to the first longitudinal shaft, the first bearing member including a semi-spherical concave bearing surface; and a second bearing member having a flat contact end and a convex semi-spherical portion rotatably receivable by the concave bearing surface. A biasing element is disposed between the flat contact end and the second shaft operable to axially displace the second bearing member relative to the second shaft.

The features, functions, and advantages can be achieved independently in various embodiments of the present inventions or may be combined in yet other embodiments.

### BRIEF DESCRIPTION OF THE DRAWINGS

The present invention will become more fully understood from the detailed description and the accompanying drawings, wherein:

Figure 1 is a side elevational, partial cross-sectional view of a high speed, high angle universal joint constructed in accordance with the teachings of the present invention;

Figure 2 is an end elevational view of the universal joint of Figure 1;

Figure 3 is a longitudinal cross-section view of the universal joint of Figure 1 showing a non-displaced condition of the universal joint;

Figure 4 is an enlarged, cross-sectional view of a centering mechanism constructed in accordance with the teachings of the present invention; and

Figure 5 is a longitudinal cross-section view similar to Figure 3, showing an exemplary displaced condition of a universal joint constructed in accordance with the teachings of the present invention.

### DETAILED DESCRIPTION OF THE PREFERRED EMBODIMENTS

The following description of the preferred embodiments is merely exemplary in nature and is in no way intended to limit the invention, its application, or uses.

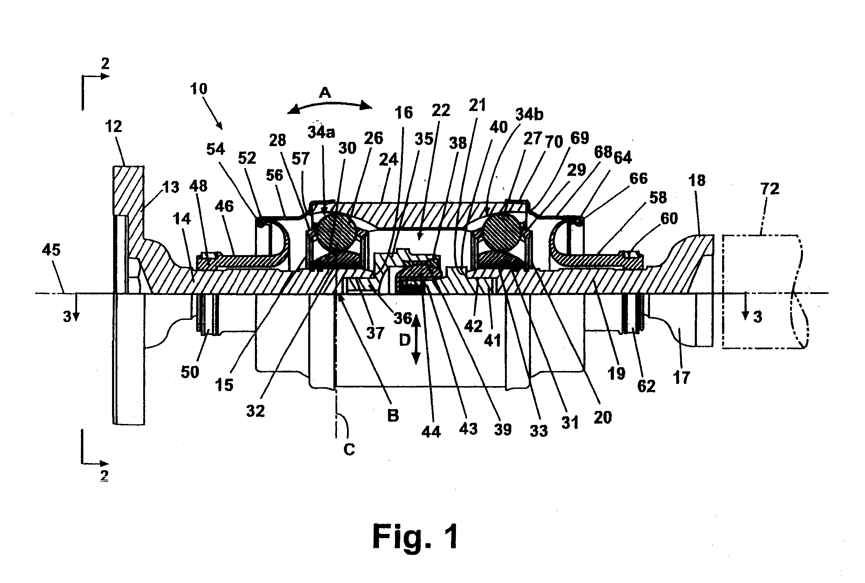

Referring generally to Figure 1, a universal joint 10 constructed in accordance with the teachings of the present invention can include an input shaft 12 having a flange 13 connected to a longitudinal shaft 14. A first constant velocity (CV) joint 15 can be fixedly connected adjacent a shaft distal end 16. Universal joint 10 can also include an output shaft 17 having a connector fitting 18 joined to a longitudinal shaft 19. A second CV joint 20 can be fixedly connected to longitudinal shaft 19 adjacent a shaft distal end 21. A centering mechanism 22 can be used to join longitudinal shaft 14 to longitudinal shaft 19. An outer bearing race 24 can be externally mounted to the first CV joint 15 and the second CV joint 20 to transfer a drive torque from input shaft 12 to output shaft 17. First CV joint 15 can include a plurality of spherical balls 26 and second CV joint 20 can include a plurality of spherical balls 27. Each of the spherical balls 26 of first CV joint 15 and spherical balls 27 of second CV joint 20 can be rotatably mounted to a cage 28 or a cage 29, respectively. Each of first CV joint 15 and second CV joint 20 can also include an inner bearing race 30 or an inner bearing race 31, respectively, each rotatably supporting spherical balls 26 and spherical balls 27, respectively. First CV joint 15 can be either slidably fit or press fit to a joint mounting surface 32 of longitudinal shaft 14. Similarly, second CV joint 20 can be either slidably joined or press fit to a joint mounting surface 33 of longitudinal shaft 19. Outer bearing race 24 can be provided with semi-spherical ball engagement surfaces 34a and 34b to rotatably engage spherical balls 26 and spherical balls 27, respectively.

Semi-spherical ball engagement surface 34a permits spherical balls 26 of first CV joint 15 to rotate in contact with semi-spherical ball engagement surface 34a thus permitting first CV joint 15 to rotate through an arc "A" about a CV joint axis of rotation "B". CV joint axis of rotation B is positioned on a first CV joint centerline "C". Second CV joint 20 is similarly rotatably mounted.

Centering mechanism 22 can further include an adapter 35 having a male end 36 which can be slidably fit or press fit into a receiving aperture 37 of longitudinal shaft 14. Male end 36 can be slid into receiving aperture 37 until adapter 35 engages shaft distal end 16. Adapter 35 can also include a female end 38 which may be adapted to receive a concave bearing member 39. Centering mechanism 22 can also include an adapter 40 having a mating end 41 which may be slidably fit or press fit into a receiving aperture 42 of longitudinal shaft 19. Adapter 40 can be engaged with longitudinal shaft 19 until adapter 40 contacts shaft distal end 21 of longitudinal shaft 19. A ball joint 44 can be slidingly engaged on a bearing end 43 of adapter 40 such that a convex surface of ball joint 44 contacts a concave mating surface of concave bearing member 39. When first CV joint 15 and second CV joint 20 rotate in response to a deflection load, centering mechanism 22 can displace in a centering displacement path represented by arrows "D". In a non-displaced condition for universal joint 10, longitudinal shaft 14 and longitudinal shaft 19 can both align coaxially along a longitudinal axis 45 of universal joint 10.

To prevent environmental contaminants from entering universal joint 10, a seal 46 having a shaft engagement end 48 can be secured to longitudinal shaft 14 using a clamp 50, for example. A distal end 52 of seal 46 can be retained in a crimped end 54 of a seal cup 56. Seal cup 56 can be matingly engaged with a first end 57 of outer bearing race 24. Similarly, a seal 58 having a shaft engagement end 60 can be secured to longitudinal shaft 19 using a clamp 62, for example. A distal end 64 of seal 58 can be retained within a crimped end 66 of a seal cup 68. Seal cup 68 can be engaged with a second end 69 of outer bearing race 24 using a cupped end 70 of seal cup 68. Material for seal 46 and seal 58 may be an elastomeric material known in the art, for example a compounded rubber.

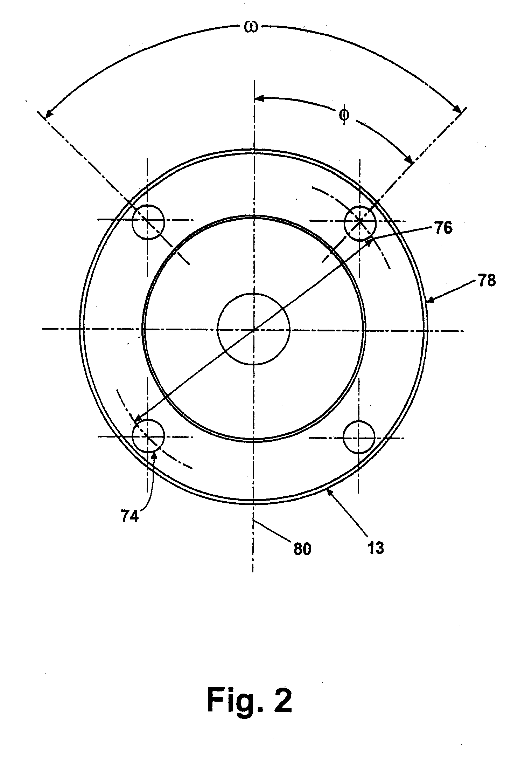

Referring generally to Figure 2, flange 13 can include a plurality of fastener apertures 74 used to matingly engage flange 13 to a drive unit flange (not shown) providing driving torque to universal joint 10. The plurality of fastener apertures 74 can be provided on a fastener or bolt circle 76. The quantity of fastener apertures 74 can vary depending on a diameter 78 of flange 13. Fastener apertures 74 can be initially located by positioning one of the fastener apertures 74 at an angle φ from a flange vertical centerline 80. In the example shown, angle φ can be approximately 45 degrees. Remaining fastener apertures 74 are generally positioned at an aperture spacing angle ω. Aperture spacing angle ω for the exemplary application shown is approximately 90°, resulting in a total of four fastener apertures 74 for the example shown. Angle φ and aperture spacing angle ω can vary depending on the quantity of fastener apertures 74, as well known to practitioners in the art.

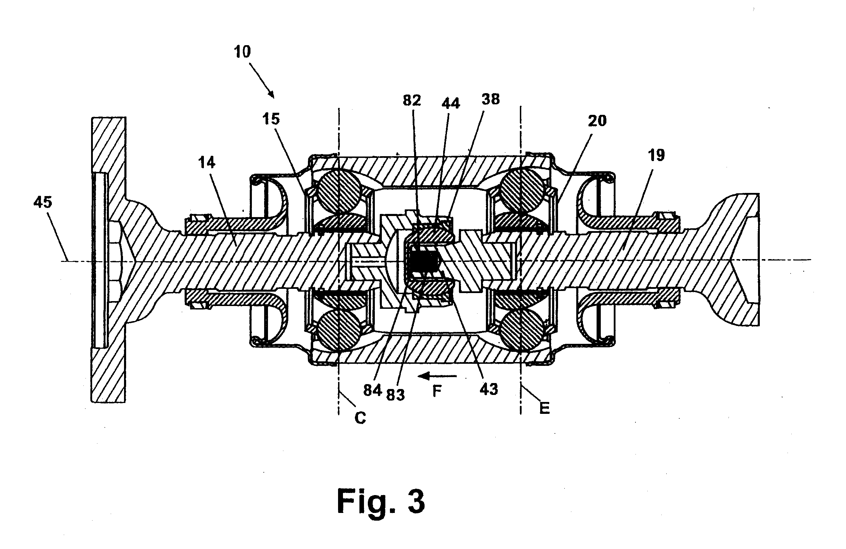

As generally seen in Figure 3, in a non-displaced condition of universal joint 10, longitudinal shaft 14 and longitudinal shaft 19 are both aligned coaxial to longitudinal axis 45. First CV joint 15 is positioned in the non-displaced condition such that first CV joint centerline "C" is approximately perpendicular to longitudinal axis 45. Similarly, a second CV joint centerline "E" of second CV joint 20 can also be perpendicularly aligned to longitudinal axis 45. A bias element 82 can be disposed within a cavity 83 formed at an engagement end 84 of bearing end 43. Bias element 82 can be a spring or similar biasing device providing a biasing force to direct ball joint 44 in a biasing direction "F". In the non-displaced condition of universal joint 10 shown in Figure 3, biasing direction "F" is coaxially aligned with longitudinal axis 45.

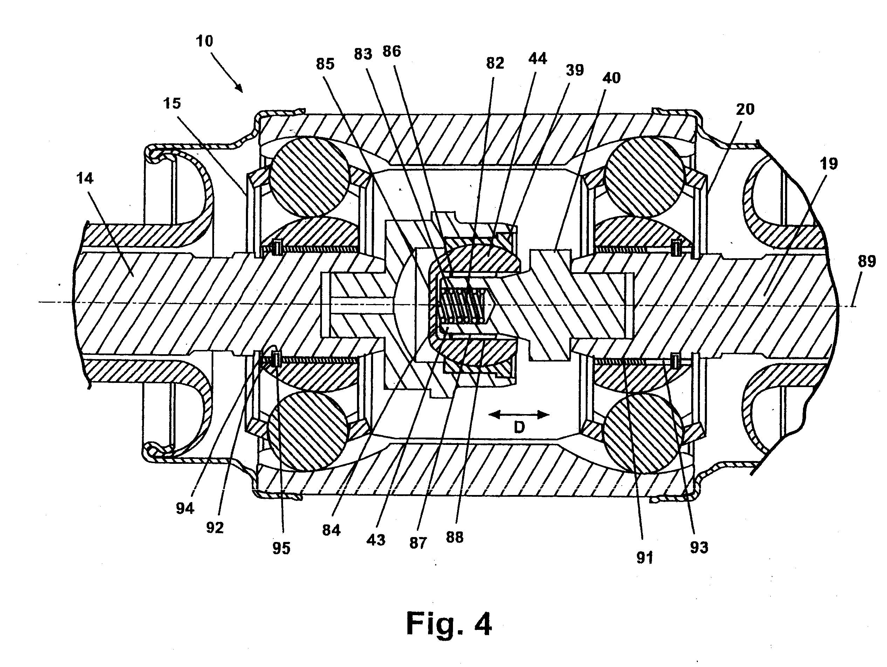

As more specifically shown in reference to Figure 4, bias element 82 can contact a substantially flat contact end 85 of ball joint 44. Ball joint 44 can be slidably disposed on bearing end 43 of adapter 40 using a plurality of pins 86. Pins 86 can also be replaced by a bearing assembly such as a roller bearing assembly (not shown). Pins 86 can be disposed between a bearing surface 87 of bearing end 43 and an interior surface 88 of ball joint 44. By slidably mounting ball joint 44, ball joint 44 can move in a displacement path indicated by arrows "G". The displacement path indicated by arrows "G" is substantially parallel to, and coaxially aligned with a longitudinal axis 89 of longitudinal shaft 19.

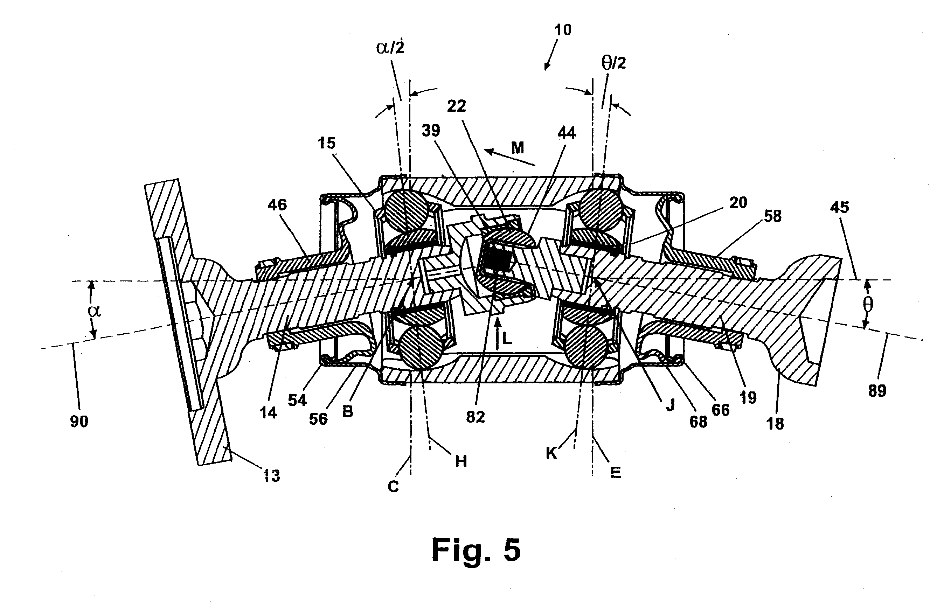

Referring generally to Figure 5, a displaced condition for universal joint 10 is shown. In this example, a longitudinal axis 90 of longitudinal shaft 14 can be rotated downward from longitudinal axis 45. In the displaced condition, longitudinal axis 90 forms an angle α with longitudinal axis 45 and longitudinal axis 89 of longitudinal shaft 19 forms an angle θ with longitudinal axis 45. In this example, first CV joint 15 rotates counterclockwise from its initial or non-displaced condition wherein first CV joint centerline "C" is approximately perpendicular to longitudinal axis 45, to a rotated centerline position "H". First CV joint 15 therefore rotates relative to longitudinal axis 90. First CV joint 15 centerline position "H" is rotated from first CV joint centerline "C" approximately half the angular rotation of angle α.

Similarly, longitudinal shaft 19 can rotate such that longitudinal axis 89 is displaced below longitudinal axis 45. Second CV joint 20 rotates clockwise about CV joint axis of rotation "J" between the second CV joint centerline "E" and a rotated centerline position "K". Second CV joint 20 therefore rotates relative to longitudinal axis 89. Second CV joint 20 centerline position "K" is rotated approximately half the angular rotation of angle θ. Flange 13 and connector fitting 18 both generally displace in a downward direction in the example shown in Figure 5. Ball joint 44 of centering mechanism 22 translates in a displacement direction "L" substantially transverse to longitudinal axis 45 and opposite to the direction of displacement of flange 13 and connector fitting 18. During the translation in displacement direction "L", ball joint 44 is displaced by bias element 82 in a ball joint displacement path "M". This displacement of ball joint 44 maintains ball joint 44 in substantial contact with concave bearing member 39.

Angle α can range between 0° up to about 7.5° in normal operating conditions, including high speed approximately 128.7 km/hr (80 mph) continuous driving operation. Angle α can typically range up to approximately 15° at a maximum deflection. The maximum deflection accommodates vehicle maximum suspension deflections permitting large road surface deflections of limited duration, off road vehicle operation or lifting the vehicle during maintenance. The maximum possible displaced condition for angle α can be determined when, for example, seal 46 compresses completely and longitudinal shaft 14 contacts crimped end 54 of seal cup 56 or alternately defined when adapter 35 contacts an internal surface of outer bearing race 24.

Longitudinal shaft 19 rotates in conjunction with oppositely directed longitudinal shaft 14 to form angle θ with longitudinal axis 45. A maximum deflection for longitudinal shaft 19 is substantially equal to the maximum deflection of longitudinal shaft 14, such that angle θ substantially equals angle α. The maximum deflection for longitudinal shaft 19 can be similarly limited by contact between seal 58 and crimped end 66 of seal cup 68 or contact between adapter 35 and the internal surface of outer bearing race 24.

For normal operating conditions the total deflection for universal joint 10 can be determined by adding angle α and angle θ. This results in an approximate 15° deflection range for normal operating conditions and a maximum deflection of approximately 30°.

Referring again to Figure 4, first and second CV joints 15,20 can be provided with a plurality of splines 91. A portion of the splines 91 of second CV joint 20 have been removed in Figure 4 to view exemplary ones of a plurality of corresponding splines 93 provided with race 31. Race 30 also includes a plurality of splines 93. First CV joint 15 can be fixedly engaged with longitudinal shaft 14 using a clip 92 inserted within a slot 94. Slot 94 can be created within longitudinal shaft 14 for example by machining. Clip 92 can be a snap ring, a C-ring, or similar device. Clip 92 also mates within a mating slot 95 created in inner bearing race 30. Second CV joint 20 can be retained in a similar manner.

Referring again to Figure 1, connector fitting 18 is exemplary of a plurality of fittings that can be used on the output end of universal joint 10. In the embodiment shown, connector fitting 18 is adapted to connect to a tubular shaft 72 (shown in phantom), commonly known in the art for transferring a drive torque. Connector fitting 18 as well as flange 13 can be any type of fitting suitable for transmission of a drive torque, including flanges, couplings, weld joints, shaft fittings, threaded joints, etc. as known to a person of skill in the art.

Materials for universal joint 10 are commonly known for universal joint application. Exemplary materials include 5120 steel, carburized and hardened for the cages 28 and 29, the inner bearing races 30,31, the outer bearing race 24, the ball joint 44 and the concave bearing member 39. Induction hardened steel can be used for the flange 13, the connector fitting 18, the longitudinal shafts 14 and 19 and the adapters 35 and 40. Spherical balls 26 and 27 can be of high carbon steel, through-hardened and ground. These materials are exemplary only and can be replaced by materials as known to a person of skill in the art. A lubricant such as a high quality bearing grease is commonly inserted into universal joint 10 before seals 46,58 are clamped by clamps 50,62, respectively.

A universal joint of the present invention offers several advantages. By combining continuous velocity joints into a single universal joint a maximum deflection of about 30° can be achieved between an input and an output of universal joint 10. By biasing a ball joint of a centering mechanism of the present invention, the ball joint is maintained in continuous contact over a greater surface area of a corresponding concave bearing member of the centering mechanism. This maintains alignment between components of the universal joint.

While various preferred embodiments have been described, those skilled in the art will recognize modifications or variations which might be made without departing from the inventive concept. The examples illustrate the invention and are not intended to limit it. Therefore, the description and claims should be interpreted liberally with only such limitation as is necessary in view of the pertinent prior art.

## Claims

1. A universal joint, comprising:
a first shaft having a first axially extending member and a first shaft distal end;
a first constant velocity joint fixedly connected to the first axially extending member, the first constant velocity joint including a first plurality of spherical balls;
a second shaft having a second axially extending member and a second shaft distal end;
a second constant velocity joint fixedly connected to the second axially extending member, the second constant velocity joint including a second plurality of spherical balls; and
a centering mechanism operably joining the first axially extending member to the second axially extending member, the centering mechanism including:
a semi-spherical female member connectable to the first shaft distal end; and
a male member having a semi-spherical portion rotatably receivable by the female member;
wherein the male member is slidably coupled to the second shaft.

2. The universal joint of Claim 1, further comprising a bearing race positionable external to both the first and second constant velocity joints operable to rotatably engage both the first and second spherical balls and to transmit a driving torque between the first constant velocity joint and the second constant velocity joint.

3. The universal joint of Claim 2, further comprising a first seal coupled to the first shaft and the bearing race and a second seal coupled to the second shaft and the bearing race.

4. The universal joint of Claim 3, further comprising:
a first seal cup operably connecting the first seal and the bearing race; and
a second seal cup operably connecting the second seal and the bearing race.

5. The universal joint of Claim 1, wherein the centering mechanism comprises a biasing element disposed between the distal end of the second shaft and the male member, wherein the biasing element is operable to bias the male member away from the distal end of the second shaft.

6. The universal joint of Claim 5, wherein the male member further comprises a substantially flat contact end in operable contact with the biasing element.

7. The universal joint of Claim 1, further comprising a first adapter connectably joining the male member and the distal end of the second shaft.

8. The universal joint of Claim 7, further comprising:
a bearing surface formed on the first adapter operable to receive the male member; and
at least one bearing element disposed between the bearing surface and the male member.

9. The universal joint of Claim 7, comprising a second adapter connectable between the female member and the distal end of the first shaft.

10. The universal joint of Claim 1,
wherein the universal joint includes a longitudinal axis that extends through both the first shaft and the second shaft when the universal joint is positioned in a non-displaced condition; and
wherein the centering mechanism is transversely displaceable relative to the longitudinal axis when the universal joint is positioned in a displaced condition.

11. The universal joint of Claim 1, wherein at least one of the first and second shafts comprises a flange defining a universal joint input end that is located opposite the distal end of at least one of the first and second shafts.

12. The universal joint of Claim 1, wherein at least one of the first and second shafts comprises a cylindrical shaft connecting end defining a universal joint output end that is located opposite the distal end of at least one of the first and second shafts.

13. A universal joint operable to transmit a driving torque, comprising:
a first assembly including a first constant velocity joint fixedly connected to a first longitudinal shaft;
a second assembly including a second constant velocity joint fixedly connected to a second longitudinal shaft;
a bearing race operably engaged with both the first and second constant velocity joints, the bearing race operable to transmit the driving torque from the first constant velocity joint to the second constant velocity joint;
a rotatable mechanism operably joining the first longitudinal shaft to the second longitudinal shaft, the rotatable mechanism including:
a first bearing member connectable to the first longitudinal shaft, the first bearing member including a semi-spherical concave bearing surface; and
a second bearing member having a substantially flat contact end and a convex semi-spherical portion rotatably receivable by the concave bearing surface;
wherein a biasing element is disposed between the flat contact end and the second shaft operable to axially displace the second bearing member relative to the second shaft.

14. The universal joint of Claim 13, further comprising a first adapter operably connecting the first bearing member to the first longitudinal shaft.

15. The universal joint of Claim 14, further comprising a second adapter operably disposed between the second bearing member and the second shaft.

16. The universal joint of Claim 15, further comprising a bearing surface formed on the second adapter, the bearing surface slidably receiving the second bearing member.

17. The universal joint of Claim 16, further comprising at least one bearing element operably received between the second bearing member and the bearing surface.

18. The universal joint of Claim 13, further comprising:
a pair of seal housings each connectable to an opposite end of the bearing race; and
a pair of seals each connectable between one of the seal housings and an adjacent one of the first and second longitudinal shafts.

19. The universal joint of Claim 18, wherein the first and second longitudinal shafts each operably contact one of the seal housings in a maximum displaced condition of the universal joint.

20. A method for constructing a universal joint, the universal joint including a pair of constant velocity joints disposed within an outer bearing race, the outer bearing race having a longitudinal axis, a first and a second extension member each having a distal end, and a pair of seal housings, the method comprising:
fixedly connecting individual ones of the constant velocity joints to an associated one of the first and second extension members;
rotatably connecting the constant velocity joints to the outer bearing race;
aligning both the first and second extension members coaxial with the longitudinal axis in a non-displaced condition;
slidably disposing a coupling member on the distal end of the second extension member;
biasing the coupling member for displacement coaxial to the second extension member;
rotatably coupling the distal end of both the first and second extension members with the coupling member; and
joining the seal housings to the outer bearing race;
positioning each of the extension members within one of the seal housings wherein the coupling member is operatively displaced both coaxial to the second extension member and transverse to the longitudinal axis in a displaced condition of the universal joint.

21. The method of Claim 20, further comprising engaging a sealing member to each of the pair of seal housings.

22. The method of Claim 21, further comprising clamping a distal end of each of the sealing members to individual ones of the extension members.

23. The method of Claim 20, further comprising rotatably disposing a plurality of spherical balls within each of the constant velocity joints operable to transmit a drive torque through the bearing race.

24. The method of Claim 23, further comprising creating a plurality of semi-spherical grooves in the bearing race operable to engage each of the plurality of spherical balls.

25. The method of Claim 20, further comprising creating a slot in each of the first and second extension members adjacent to an installed position of one of the pair of constant velocity joints.

26. The method of Claim 25, further comprising installing a pin within each slot to fixedly connect the pair of constant velocity joints to the first and second extension members.

27. The method of Claim 20, further comprising press fitting each of the constant velocity joints to one of the first and second extension members.
